# EUROPÄISCHE PATENTANMELDUNG

(11) **EP 1 634 918 A1**
(43) Veröffentlichungstag der Anmeldung: **15.03.2006**
(21) Anmeldenummer: 05019590.8
(22) Anmeldetag: 08.09.2005
(51) Int. Cl.: C08K 5/5415, C09D 143/04, C09D 183/04, C08L 83/04, C08L 83/06

(54) **Silicondecklack mit verbesserter Schmutzabweisung und verbesserter Verklebbarkeit**

(30) Priorität: 14.09.2004 DE 102004044392
(71) Anmelder: Wacker Chemie AG, 81737 München (DE)
(72) Erfinder: Henn, Julia, 85461 Mehring (DE)
(74) Vertreter: Gössmann, Christoph Tassilo

(57) **Zusammenfassung**

Zusammensetzung herstellbar unter Verwendung von Polymerkomponenten (1)
(A1) Polyorganosiloxanen aus Einheiten (T-Einheiten) der Formel (R₁Si-O_{3/2}) und gegebenenfalls Einheiten (M-Einheiten) der Formel (R₃Si-O_{1/2})
   und/oder
(A2) Polyorganosiloxanen aus Einheiten (Q-Einheiten) der Formel (Si-O_{4/2}) und gegebenenfalls Einheiten (M-Einheiten) der Formel (R₃Si-O_{1/2})
mit der Maßgabe, daß pro Molekül 0,01 bis 3,0 Gew.-% Sigebundene Reste OR¹ enthalten sind,
sowie gegebenenfalls einer oder mehreren Polymerkomponenten ausgewählt aus der Gruppe bestehend aus:
(B) Vinylchlorid-Hydroxypropylacrylat-Copolymere
(C) Vinylacetat-Ethylen-Copolymer
(D) Polyvinylchlorid
(E) Polyamid
(F) Polyester
(G) Acrylat-Polyester-Copolymere
(H) Polyamid-Polyester-Copolymere
(I) Vinylacetat-Polyester Copolymere
(J) Monomere (Meth)acrylate, mit der Maßgabe, daß sie mit Si-gebundenen (Meth)acrylatgruppen haltigen Silanen copolymerisiert werden,

(2) Silan der allgemeinen Formel

   R³ ₓSi(OR²)₄₋ₓ ,
(3) Siliconpartikel, die aus einem einzigen Molekül bestehende vernetzte Organopolysiloxanpartikel sind, die einen mittleren Durchmesser von 5 bis 200 nm aufweisen.

## Beschreibung

Gegenstand der Erfindung ist eine Zusammensetzung sowie Formkörper, Flächengebilde oder Elastomer.

Aus EP 718 355 A sind Zusammensetzungen aus Polyorganosiloxankomponenten bekannt, die bereits eine verbesserte Schmutzabweisung zum bekannten Stand der Technik bei ihrem Anmeldetag aufweisen, allerdings ist die Verklebbarkeit von Beschichtungen aus dieser Zusammensetzung mit Siliconuntergrund schlecht.

Aufgabe der Erfindung ist es den bekannten Stand der Technik zu verbessern, insbesondere die Schmutzabweisung und die Verklebbarkeit weiter zu verbessern.

Gegenstand der Erfindung ist eine Zusammensetzung herstellbar unter Verwendung von

### Polymerkomponenten (1)

(A1) Polyorganosiloxanen aus Einheiten (T-Einheiten) der Formel (R₁Si-O_{3/2}) und gegebenenfalls Einheiten (M-Einheiten) der Formel (R₃Si-O_{1/2}) und/oder
(A2) Polyorganosiloxanen aus Einheiten (Q-Einheiten) der Formel (Si-O_{4/2}) und gegebenenfalls Einheiten (M-Einheiten) der Formel (R₃Si-O_{1/2})
   worin
   R gleich oder verschieden, gegebenenfalls halogenierte Kohlenwasserstoffreste mit 1-18 Kohlenstoffatomen je Rest oder OR¹ bedeutet, wobei R¹ gleich oder verschieden sein kann und Wasserstoff oder einen einwertigen gegebenenfalls substituierten Kohlenwasserstoffrest mit 1-8 Kohlenstoffatom(en) bedeutet,
   mit der Maßgabe, daß pro Molekül 0,01 bis 3,0 Gew.-% Sigebundene Reste OR¹ enthalten sind,
   sowie gegebenenfalls einer oder mehreren Polymerkomponenten ausgewählt aus der Gruppe bestehend aus:
(B) Vinylchlorid-Hydroxypropylacrylat-Copolymere
(C) Vinylacetat-Ethylen-Copolymer
(D) Polyvinylchlorid
(E) Polyamid
(F) Polyester
(G) Acrylat-Polyester-Copolymere
(H) Polyamid-Polyester-Copolymere
(I) Vinylacetat-Polyester Copolymere
(J) Monomere (Meth)acrylate, mit der Maßgabe, daß sie mit Sigebundenen (Meth)acrylatgruppen haltigen Silanen copolymerisiert werden,

(2) Silan der allgemeinen Formel

   R³ₓSi(OR²)₄₋ₓ

   wobei R² einen einwertigen, gegebenenfalls substituierten Kohlenwasserstoffrest,
   R³ einen einwertigen organischen Rest,
   x 0 oder 1 bedeutet,
(3) Siliconpartikel
(4) gegebenenfalls Lösungsmittel
(5) gegebenenfalls Katalysator
(6) gegebenenfalls Wasser.

Beispiele für Reste R sind vorzugsweise Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl- und tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Alkenylreste, wie der Vinyl- und der Allylrest; Cycloalkylreste, wie Cyclopentyl-, Cyclohexyl-, Cycloheptylreste und Methylcyclohexylreste.

Beispiele für substituierte Reste R sind Cyanalkylreste, wie der ß―Cyanethylrest, und halogenierte Kohlenwasserstoffreste, beispielsweise Halogenalkylreste, wie der 3,3,3-Trifluor-n-propylrest, der 2,2,2,2',2',2'-Hexafluorisopropylrest, der Heptafluorisopropylrest.

Schon wegen der leichteren Zugänglichkeit ist als Rest R Methyl- oder Ethylrest bevorzugt.

Bei Rest R¹ handelt es sich bevorzugt um Wasserstoffatom und gegebenenfalls substituierte Kohlenwasserstoffreste mit 1 bis 8 Kohlenstoffatom(en), wobei Wasserstoff und Alkylreste mit 1 bis 3 Kohlenstoffatom(en), insbesondere der Methyl-, Ethyl- und Isopropylrest, besonders bevorzugt sind.

Beispiele für Reste R¹ sind die für den Rest R genannten Beispiele mit 1 bis 8 Kohlenstoffatom(en).

Beispiele für Reste R² sind bevorzugt gegebenenfalls substituierte Kohlenwasserstoffreste mit 1 - 18 Kohlenstoffatom(en), besonders bevorzugt sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest und iso-Hexylreste; Heptylreste, wie der n-Heptylrest und iso-Heptylreste; Octylreste, wie der n-Octylrest und iso-Octylreste, wie der 2,2,4-Trimethylpentylrest. Bevorzugt ist der Methyl- und Ethylrest. Beispiele für Kohlenwasserstoffreste R², die durch ein Ethersauerstoffatom substituiert sein können, sind der Methoxyethyl-, der Ethoxyethyl-, der Methoxy-n-propyl- und der Methoxy-iso-propylrest.

Beispiele für Reste R³ sind bevorzugt gegebenenfalls substituierte Kohlenwasserstoffreste mit 1 - 18 Kohlenstoffatom(en), besonders bevorzugt sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest und iso-Hexylreste; Heptylreste, wie der n-Heptylrest und iso-Heptylreste; Octylreste, wie der n-Octylrest und iso-Octylreste, wie der 2,2,4-Trimethylpentylrest; Nonylreste, wie der n-Nonylrest und iso-Nonylreste; Decylreste, wie der n-Decylrest und iso-Decylreste; Dodecylreste, wie der n-Dodecylrest und iso-Dodecylreste; Octadecylreste, wie der n-Octadecylrest und iso-Octadecylreste; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste, Ethylphenylreste, o-, m-, p-Vinylphenylreste und der Nonylphenylrest; und Aralkylreste, wie der Benzylrest, der α- und der β-Phenylethylrest; Isocyanalkylreste wie der Isocyanpropylrest, Isocyanethylrest, Isocyanhexylrest, Isocyanoctylrest, wobei der Isocyanpropylrest bevorzugt ist und (Meth)acryloxyreste wie der Methacryloxypropylrest, Acryloxypropylrest, Methacryloxyhexylrest, Acryloxyhexylrest, wobei der Methacryloxypropylrest bevorzugt ist.

Beispiele für halogenierte Kohlenwasserstoffreste R sind Halogenalkylreste, wie der 3-Chlor-n-propylrest, der 3,3,3-Trifluor-n-propylrest, der 2,2,2,2',2',2'-Hexafluorisopropylrest, der Heptafluorisopropylrest, und Halogenarylreste, wie der o-, m- und p-Chlorphenylrest.

Bei den Polyorganosiloxanen (A1) beträgt das Verhältnis M-Einheiten zu T-Einheiten 0 bis 1,8:1, bevorzugt 0,1 bis 1,2:1 und besonders bevorzugt 0,3 bis 0,8:1 und bei den Polyorganosiloxanen (A2) beträgt das Verhältnis M-Einheiten zu Q-Einheiten 0,00 bis 2,7:1, bevorzugt 0,01 bis 2,1:1 besonders bevorzugt 0,1 bis 1,8:1.

Die erfindungsgemäßen Polyorganosiloxane bilden ein Polymerisat aus 2-500, bevorzugt 4-300 Monomereinheiten.

Die Polymerkomponenten (A1) und (A2) können allein oder jeweils als Mischungen oder Umsetzungsprodukte der Organosiloxaneinheiten eingesetzt werden. Bevorzugt sind Polymerkomponenten, wie die Harzlösung K oder die Harzlösung K 0118 der Wacker-Chemie GmbH. Diese Harze können vorzugsweise in Lösungsmitteln, wie Toluol, Xylol, Aceton, Essigsäureethylester, Ethanol gelöst sein. Die Lösungsmittel werden in Mengen von vorzugsweise 10 bis 98 Gew.%, bevorzugt 30 bis 98 Gew.%, jeweils bezogen auf das Gesamtgewicht der Polymerkomponenten, eingesetzt.

Die Polymerkomponenten (A1) und (A2) können alleine oder als Mischungen in einem Verhältnis von 1:20 bis 20:1, bevorzugt 1:10 bis 10:1 eingesetzt werden.

Neben den Polymerkomponenten (A1) und (A2) können auch als Polymerkomponenten (B) Vinylchlorid-Hydroxypropylacrylat-Copolymere eingesetzt werden. Solche Produkte werden von der Vinnolit GmbH im Handel unter der Bezeichnung Vinnolit E 15/40 A angeboten. Oder es können (C) Copolymere aus Vinylacetat und Ethylen ebenfalls als Polymerkomponenten eingesetzt werden. Durch in der Literatur bekannte Verfahren können aus beiden Monomeren Copolymere in jedem gewünschten Verhältnis hergestellt werden.
Als weitere Polymerkomponenten können (D) Polyvinylchlorid, (E) Polyamid, (F) Polyester, (G) Acrylat-Polyester-Copolymere, (H) Polyamid-Polyester-Copolymere oder (I) Vinylacetat-Polyester-Copolymere oder (J) Monomere (Meth)acrylate, wie Methylmethacrylat, Butylmethacrylat, eingesetzt werden, die im Reaktionsgemisch polymerisiert werden. Bevorzugt sind die Polymerkomponenten (A1), (A2), (B) und (C), besonders bevorzugt sind die Polymerkomponenten (A1) und (A2).

Die Polymerkomponenten sind in Mengen von 2-70 Gew.% in den erfindungsgemäßen Zusammensetzungen enthalten. Bevorzugt ist eine Menge von 5-50 Gew.%, besonders bevorzugt ist eine Menge von 10-40 Gew.%.

Bevorzugte Beispiele für Silane (2) sind
Methacryloxypropyltrimethoxysilan (Handelsbezeichnung Silan GF 31 - Wacker-Chemie GmbH),
Methyltriethoxysilan (Handelsbezeichnng Silan M1-Triethoxy - Wacker-Chemie GmbH),
Vinyltriethoxysilan (Handelsbezeichnung Silan GF 56 -Wacker-Chemie GmbH),
Tetraethoxysilan (Handelsbezeichnung TES 28 - Wacker-Chemie GmbH),
Gemische aus niedermolekularen Hydrolyseprodukten aus Tetraethoxysilan (Handelsbezeichnung TES 40 - Wacker-Chemie GmbH),
Methyltrimethoxysilan (Handelsbezeichnung M1-Trimethoxy - Wacker-Chemie GmbH),
Isocyanatpropyltrimethoxysilan (Handelsbezeichnung Silan Y 9030 UCC).

Die Silane sind in Mengen von 0,1-20 Gew.%, bevorzugt von 0,5-10 Gew.%, enthalten.

Die Polymerkomponenten werden mit den Silanen (2) oder deren Mischungen im Verhältnis von 100:1 bis 100:30, besonders bevorzugt 100:2 bis 100:20, eingesetzt.

Die Zusammensetzungen werden vorzugsweise in organischen Lösungsmitteln, wie Tetrahydrofuran, Toluol, Aceton, Naphtha, Benzin, Methylethylketon, Xylol, Butylalkohol, Ethylacetat, Isopropylacetat, Isopropanol hergestellt.

Organische Lösungsmittel sind in Mengen von 10 bis 90 Gew.% enthalten, bevorzugt sind 30-85 Gew.%.

Die Zusammensetzungen werden gegebenenfalls mit Kondensationskatalysatoren, wie vorzugsweise organische Zinnverbindungen oder organische Zirkonverbindungen wie vorzugsweise Zirkoniumbutylat, Dibutylzinndilaurat, Dibutylzinnoxid, Dioctylzinndilaurat, Dibutylzinndiacetat vermischt.

Bevorzugt unter diesen Kondensationskatalysatoren sind Dibutylzinndilaurat, Dibutylzinnacetat, Zirkoniumbutylat.

Die Kondensationskatalysatoren sind in Mengen zwischen 0-10 Gew.% enthalten. Bevorzugt sind Mengen von 0-5 Gew.%, besonders bevorzugt sind Mengen von 0-2 Gew.%.

Als Quelle für freie Radikale, welche vorzugsweise bei der Polymerenkomponente (J) eingesetzt werden, sind Peroxide, insbesondere organische Peroxide bevorzugt. Beispiele für solche organischen Peroxide sind Peroxyketal, z. B. 1,1-Bis(tert.-butylperoxy)-3,3,5-trimethylcyclohexan, 2,2-Bis(tert.-butylperoxy)butan und ähnliche, Diacylperoxide, wie z. B. Acetylperoxid, Isobutylperoxid, Benzoylperoxid und ähnliche, Dialkylperoxide, wie z. B. Di-tert-butylperoxid, Tert-butyl-cumylperoxid, Dicumylperoxid, 2,5-Dimethyl-2,5-Di(tert.-butylperoxy)hexan, t-Butyl-per-ethylhexanoate, und ähnliche und Perester, wie z. B. Tert.-butylperoxyisopropylcarbonat. Bevorzugt ist t-Butyl-per-ethylhexanoate (Handelsbezeichnung Peroxan PO) Interox TBPIN

Vorzugsweise werden Peroxide in Mengen von 0 bis 5 Gew.%, insbesondere von 0 bis 3 Gew.%, jeweils bezogen auf das Gewicht von eingesetzter Verbindung im erfindungsgemäßen Verfahren, verwendet.

Gegebenenfalls kann auch Wasser in Mengen von 0-20 Gew.%, bevorzugt 0-10 Gew.% zugegeben werden.

Die Zusammensetzungen bestehen entweder aus Siliconharzen, die mit funktionellen Silanen vermischt und in organischen Lösungsmitteln hydrolysiert werden oder aus organischen (Co)polymeren, die mit funktionellen Silanen copolymerisiert werden.

Die Siliconpartikel sind aus einem einzigen Molekül bestehende vernetzte Organopolysiloxanpartikel, die einen mittleren Durchmesser von 5 bis 200 nm aufweisen, bei denen mindestens 80 % der Partikel einen Durchmesser besitzen, der höchstens 30 % vom mittleren Durchmesser abweicht und die in einem Lösungsmittel zu mindestens 5 Gew.-% löslich sind.

Die Organopolysiloxanpartikel weisen typischerweise mittlere Molmassen von mindestens 10⁵, insbesondere 5 x 10⁵ bis höchstens 10¹⁰, insbesondere 10⁹ auf. Die mittleren Durchmesser der Organopolysiloxanpartikel betragen vorzugsweise mindestens 10 und höchstens 150 nm. Vorzugsweise besitzen mindestens 80 % der Partikel einen Durchmesser, der höchstens 20 %, insbesondere höchstens 10 % vom mittleren Durchmesser abweicht. Bei den Organopolysiloxanpartikeln handelt es sich vorzugsweise um sphärische Mikrogele.

Die Organopolysiloxanpartikel sind intramolekular vernetzt, weisen aber keine intermolekulare Vernetzung zwischen den Organopolysiloxanpartikeln auf. Deshalb sind die Organopolysiloxanpartikel gut in Lösungsmitteln löslich.

Das Lösungsmittel, in dem sich die Organopolysiloxanpartikel zu mindestens 5 Gew.-% lösen, hängt vom Aufbau der Organopolysiloxanpartikel und insbesondere von den sich an der Oberfläche der Organopolysiloxanpartikel befindenden Gruppen ab. Für alle Organopolysiloxanpartikel gibt es ein geeignetes Lösungsmittel. Beispiele für solche Lösungsmittel sind Wasser; Alkohole, wie Methanol, Ethanol, n-Propanol, iso-Propanol; Ether, wie Dioxan, Tetrahydrofuran, Diethylether, Diethylenglycoldimethylether; chlorierte Kohlenwasserstoffe, wie Dichlormethan, Trichlormethan, Tetrachlormethan, 1,2-Dichlorethan, Trichlorethylen; Kohlenwasserstoffe, wie Pentan, n-Hexan, Cyclohexan, Hexan-Isomerengemische, Heptan, Oktan, Waschbenzin, Petrolether, Benzol, Toluol, Xylole; Ketone, wie Aceton, Methylethylketon, Methyl-isobutylketon; Dimethylformamid, Schwefelkohlenstoff und Nitrobenzol, oder Gemische dieser Lösungsmittel, sowie Monomere, wie Methylmethacrylat oder Styrol und Polymere, wie flüssige Organopolysiloxane.

Die Löslichkeit der Organopolysiloxanpartikel kann beispielsweise bei 20°C bestimmt werden. Besonders geeignet als Lösungsmittel für Organopolysiloxanpartikel mit Kohlenwasserstoffresten ist Toluol, für Organopolysiloxanpartikel mit Aminoresten ist Tetrahydrofuran und für Organopolysiloxanpartikel mit Sulfonatoresten ist Wasser. Beispielsweise sind Organopolysiloxanpartikel mit Kohlenwasserstoffresten in Toluol nahezu unbegrenzt und in flüssigem Polydimethylsiloxan mit einer Viskosität von 35 mPa·s bei 25°C bis zu 15 Gew.-% löslich. Vorzugsweise sind die Organopolysiloxanpartikel in einem Lösungsmittel, das ausgewählt wird aus Toluol, Tetrahydrofuran und Wasser, zu mindestens 10 Gew.-%, insbesondere zu mindestens 15 Gew.-% löslich.

Vorzugsweise sind die Organopolysiloxanpartikel aufgebaut aus 0,5 bis 80,0 Gew.-% Einheiten der allgemeinen Formel

[R⁴₃SiO_{1/2}] **(1)**,

0 bis 99,0 Gew.-% Einheiten der allgemeinen Formel

[R⁴₂SiO_{2/2}] **(2)**,

0 bis 99,5 Gew.-% Einheiten der allgemeinen Formel

[R⁴SiO_{3/2}] **(3)**,

0 bis 80,0 Gew.-% Einheiten der allgemeinen Formel

[SiO_{4/2}] **(4)**

und 0 bis 20,0 Gew.-% Einheiten der allgemeinen Formel 4

[R⁴ₐSi(O_{(3-a)/2})-R⁵-X-(R⁵-Si(O_{(3-a)/2}))_{b}R⁴ₐ] **(5)**,

wobei
- **R**^{**4**}: ein Wasserstoffatom oder gleiche oder verschiedene einwertige SiC-gebundene, gegebenenfalls substituierte C₁- bis C₁₈-Kohlenwasserstoffreste,
- **R**^{**5**}: gleiche oder verschiedene zweiwertige SiC-gebundene, gegebenenfalls substituierte C₁- bis C₁₈₋Kohlenwasserstoffreste, welche durch
zweibindige, beidseitig an Kohlenstoffatome gebundene Reste aus der Gruppe -O-, -COO-, -OOC-, -CONR⁶-, -NR⁶CO- und -CO- unterbrochen sein können,
- **R**^{**6**}: ein Wasserstoffatom oder einen Rest **R**^{**4**}**,**
- **X**: einen Rest aus der Gruppe -N=N-, -O-O-, -S-S- und -C(C₆H₅)₂-C(C₆H₅)₂-,
- **a**: die Werte 0, 1 oder 2 und,
- **b**: die Werte 0 oder 1 bedeuten

mit der Maßgabe, daß die Summe der Einheiten der allgemeinen Formeln (3) und (4) mindestens 0,5 Gew.-% beträgt.

Beispiele für unsubstituierte Reste **R**⁴ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentyl-rest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Alkenylreste, wie der Vinyl-, Allyl-, n-5-Hexenyl-, 4-Vinylcyclohexyl- und der 3-Norbornenylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthyl-, Anthryl-und Phenanthrylrest; Alkarylreste, wie o-, m-, p-Tolylreste, Xylylreste und Ethylphenylreste; Aralkylreste, wie der Benzylrest, der alpha- und der β-Phenylethylrest, sowie der Fluorenylrest.

Beispiele für substituierte Kohlenwasserstoffreste als Rest **R** sind halogenierte Kohlenwasserstoffreste, wie der Chlormethyl-, 3-Chlorpropyl-, 3-Brompropyl-, 3,3,3-Trifluorpropyl- und 5,5,5,4,4,3,3-Heptafluorpentylrest sowie der Chlorphenyl-, Dichlorphenyl- und Trifluortolylrest; Mercaptoalkylreste, wie der 2-Mercaptoethyl- und 3-Mercaptopropylrest; Cyanoalkylreste, wie der 2-Cyanoethyl- und 3-Cyanopropylrest; Aminoalkylreste, wie der 3-Aminopropyl-, N-(2-Aminoethyl)-3-aminopropyl- und N-(2-Aminoethyl)-3-amino-(2-methyl)propylrest; Aminoarylreste, wie der Aminophenylrest; quarternäre Ammoniumreste; Acryloxyalkylreste, wie der 3-Acryloxypropyl- und 3-Methacryloxypropylrest; Hydroxyalkylreste, wie der Hydroxypropylrest; Phosphonsäurereste; Phosphonatreste und Sulfonatreste, wie der 2-Diethoxyphosphonato-ethyl- oder der 3-Sulfonato-propylrest.

Bei dem Rest **R**^{**4**} handelt es sich bevorzugt um unsubstituierte und substituierte C₁- bis C₆-Alkylreste, Wasserstoff und den Phenylrest, insbesondere um den Methyl-, Phenyl-, Vinyl-, Allyl-, Methacryloxypropyl-, 3-Chlorpropyl-, 3-Mercaptopropyl-, 3-Aminopropyl- und den (2-Aminoethyl)-3-aminopropyl-Rest, Wasserstoff und quarternäre Ammoniumreste.

Beispiele für zweiwertige Kohlenwasserstoffreste **R**^{**5**} sind gesättigte Alkylenreste wie der Methylen- und Ethylenrest, sowie Propylen-, Butylen-, Pentylen-, Hexylen-, Cyclohexylen- und Octadecylenreste oder ungesättigte Alkylen- oder Arylenreste, wie der Hexenylenrest und Phenylenreste und insbesondere Reste der Formeln (6)

-(CH₂)₃N(R⁷)-C(O)-(CH₂)₂-C(CN)(CH₃)- **(6)**,

in der
- **R**^{**7**}: ein Wasserstoffatom, einen Methyl- oder Cyclohexylrest bedeutet und (7)

-(CH₂)₃-O-C(O)-(CH₂)₂-C(O)- **(7)**.

Bevorzugte Reste **X** sind -N=N- und -O-O-.

Besonders bevorzugte Einheiten der allgemeinen Formel (5) fallen unter die allgemeine Formel (8)

[(CH₃)ₐSi(O_{(3-a)/2})-(CH₂)₃-N(R⁷)-C(O)-(CH₂)₂-C(CN) (CH₃)-N=]₂

in der **a** und **R**^{**7**} die vorstehenden Bedeutungen aufweisen.

Vorzugsweise enthalten die Organopolysiloxanpartikel
1 bis 80,0 Gew.-% Einheiten der allgemeinen Formel (1),
0 bis 98,0 Gew.-% Einheiten der allgemeinen Formel (2),
0 bis 99,0 Gew.-% Einheiten der allgemeinen Formel (3),
0 bis 50,0 Gew.-% Einheiten der allgemeinen Formel (4) und
0 bis 10,0 Gew.-% Einheiten der allgemeinen Formel (5)

mit der Maßgabe, daß die Summe der Einheiten der allgemeinen Formeln (3) und (4) mindestens 1 Gew.-% beträgt.

Insbesondere enthalten die Organopolysiloxanpartikel
5 bis 70,0 Gew.-% Einheiten der allgemeinen Formel (1),
0 bis 94,0 Gew.-% Einheiten der allgemeinen Formel (2),
1 bis 95,0 Gew.-% Einheiten der allgemeinen Formel (3),
0 Gew.-% Einheiten der allgemeinen Formel (4) und
0 bis 5,0 Gew.-% Einheiten der allgemeinen Formel (5).

Die Herstellung der Organopolysiloxanpartikel erfolgt vorzugsweise gemäß EP 744 432 (Wacker-Chemie GmbH) und deren Beispielen.

Zur strukturellen Charakterisierung der Organopolysiloxanpartikel eignet sich besonders die statische und dynamische Lichtstreuung. Statische und dynamische Lichtstreuung sind dem Fachmann bekannte, etablierte Methoden in der makromolekularen Chemie und Kolloidchemie zur Charakterisierung disperser Partikel. In der statischen Lichtstreuung mittelt man die Streuintensität bei verschiedenen Winkeln über ein genügend langes Zeitintervall und erhält Aussagen über die statischen Eigenschaften der Makromoleküle, wie dem Gewichtsmittel der Molmasse M_{w}, dem z-Mittel des Quadrats des Trägheitsradius <R_{g}2>_{z}, und dem zweiten Virialkoeffizienten A₂, der die intra- und intermolekularen thermodynamischen Wechselwirkungen der dispergierten Partikel mit dem Lösungsmittel beschreibt. Im Gegensatz zur statischen wird bei der dynamischen Lichtstreuung die Fluktuation der Streulichtintensität als Funktion der Zeit beobachtet. Dies führt zu Aussagen über das dynamische Verhalten der untersuchten Moleküle. Gemessen werden das z-Mittel des Diffusionskoeffizienten D_{z} und damit über das Stokes-Einstein-Gesetz der hydrodynamische Radius Rₕ und der Koeffizient k_{d}, der die Konzentrationsabhängigkeit des Diffusionskoeffizienten beschreibt. Aus der Winkelabhängigkeit des Streulichts kann man die Teilchenform ermitteln und gegebenenfalls vorhandene Strukturierungen in Lösung aufklären. Die simultane statische und dynamische Lichtstreumessung ermöglicht es, mit einem einzigen Experiment die oben genannten Aussagen über das untersuchte System zu treffen und somit Informationen z.B. über Partikelgröße, -dispersität und -form, sowie über Molekulargewicht und Dichte zu erhalten. Dies ist beispielsweise in M. Schmidt, Simultaneous Static and Dynamic Light Scattering: Applications to Polymer Structure Analysis, in: Dynamic Light Scattering: The Method and some Applications; Brown, W. (Hrsg.); Oxford University Press, Oxford, UK, 372-406 (1993) beschrieben.

Der Quotient aus Trägheits- und hydrodynamischem Radius, das sogenannte p-Verhältnis, liefert strukturelle Informationen über die Teilchenform, wie harte Kugel, Hohlkugel, Knäuel, Stäbchen oder Sternpolymer. Für die Teilchenform "harte Kugel" beträgt das theoretische p-Verhältnis 0,775; die bei den bevorzugten Organopolysiloxanpartikeln gemessenen Werte liegen von 0,775 bis höchstens ρ=1,0. Die bevorzugten Organopolysiloxanpartikel sind deshalb sphärisch.

Der Größenbereich der Organopolysiloxanpartikel stellt den Grenzbereich zwischen großen Molekülen, Oligomeren und Dendrimeren einerseits und kleinen Festkörpern andererseits dar, entspricht somit einer Nahtstelle zwischen Festkörper und Molekül. Zum einen sind kollektive Festkörpereigenschaften noch nicht ausgebildet, zum anderen ist molekulares Verhalten nicht mehr oder nur noch ansatzweise zu beobachten. Beispiele für partikuläre Strukturen dieser Größenordnung mit nahezu fixierter Konformation sind Mikrogele. Nach Antonietti (Angew. Chemie 100 (1988) 1813-1817) werden aus wäßrigen kolloidalen Systemen erhaltene Mikrogele mit Partikeldurchmessern im mesoskopischen Größenbereich von 5 bis 200 nm und Molmassen von 10⁶ bis 10¹¹ (g/Mol) als "Typ B"-Mikrogele bezeichnet. "Typ B"-Mikrogele sind besonders interessant z.B. als Füllstoffe oder Verträglichkeitsvermittler für (optisch transparente) Polymere oder als potentielle Ausgangsmaterialien für maßgeschneiderte Katalysatorsysteme.

Bevorzugt weisen die Siliconelastomerpartikel eine Partikelgröße von 80-120 nm auf und liegen in Methylisobutylketon vor. Andere Lösemittel wie Toluol, Aceton und Ethylacetat und Butylacetat sind möglich, aber MIBK hat sich als besonders vorteilhaft erwiesen.

Ein weiterer Gegenstand der Erfindung ist ein Verfahren zur Herstellung einer Zusammensetzung, wobei die Komponenten der Zusammensetzung umgesetzt oder vermischt werden, wobei unter Verwendung von

### Polymerkomponenten (1)

(A1) Polyorganosiloxanen aus Einheiten (T-Einheiten) der Formel (R₁Si-O_{3/2}) und gegebenenfalls Einheiten (M-Einheiten) der Formel (R₃Si-O_{1/2}) und/oder
(A2) Polyorganosiloxanen aus Einheiten (Q-Einheiten) der Formel (Si-O_{4/2}) und gegebenenfalls Einheiten (M-Einheiten) der Formel (R₃Si-O_{1/2}) worin
   R gleich oder verschieden, gegebenenfalls halogenierte Kohlenwasserstoffreste mit 1-18 Kohlenstoffatomen je Rest oder OR¹ bedeutet, wobei R¹ gleich oder verschieden sein kann und Wasserstoff oder einen einwertigen gegebenenfalls substituierten Kohlenwasserstoffrest mit 1-8 Kohlenstoffatom(en) bedeutet,
   mit der Maßgabe, dass pro Molekül 0,01 bis 3,0 Gew.-% Sigebundene Reste OR¹ enthalten sind,
   sowie gegebenenfalls einer oder mehreren Polymerkomponenten ausgewählt aus der Gruppe bestehend aus:
(B) Vinylchlorid-Hydroxypropylacrylat-Copolymere
(C) Vinylacetat-Ethylen-Copolymer
(D) Polyvinylchlorid
(E) Polyamid
(F) Polyester
(G) Acrylat-Polyester-Copolymere
(H) Polyamid-Polyester-Copolymere
(I) Vinylacetat-Polyester Copolymere
(J) Monomere (Meth)acrylate, mit der Maßgabe, dass sie mit Sigebundenen (Meth)acrylatgruppen haltigen Silanen copolymerisiert werden,

(2) Silan der allgemeinen Formel

   R³ₓSi (OR²)₄₋ₓ ,

   wobei R² einen einwertigen, gegebenenfalls substituierten Kohlenwasserstoffrest,
   R³ einen einwertigen organischen Rest,
   x 0 oder 1 bedeutet,
(3) Siliconpartikel
(4) gegebenenfalls Lösungsmittel
(5) gegebenenfalls Katalysator
(6) gegebenenfalls Wasser

umgesetzt oder vermischt werden.

Beispiele für R, R¹, R² und R³ sind die oben für die Reste R, R¹, R² und R³ genannten Beispiele.

Die Herstellung der erfindungsgemäßen Zusammensetzungen kann in Rühr- und Mischanlagen, wie sie in der chemischen Industrie üblich sind, erfolgen. Die Anlagen sollten im Bereich von -10 °C bis +150 °C temperierbar und in der Temperatur regelbar sein. Wegen der Verwendung von organischen Lösungsmitteln ist Explosionsschutz unumgänglich.

Die Herstellung der Zusammensetzungen erfolgt durch einfaches Durchmischen der einzelnen Komponenten bei Temperaturen, die der umgebenden Raumtemperatur entsprechen. Es können aber auch Reaktionen, wie Polymerisation, Kondensationen oder Umsetzung an reaktiven Gruppen durchgeführt werden. Dies erfordert dann eine thermische Kontrolle der Reaktionsabläufe. Solche Verfahren werden zwischen 0 °C und 150 °C durchgeführt. Bevorzugt werden Temperaturen zwischen 10 °C und 120 °C. Der Einfachheit halber werden die Zusammensetzungen bei normalem Luftdruck hergestellt. Die Herstellung kann aber ebenso bei Überdruck bis zu 20 bar oder im Vakuum bis 20 mbar stattfinden.

Ein weiterer Gegenstand der Erfindung ist ein Formkörper, Flächengebilde oder Elastomer, das mit einer erfindungsgemäßen Zusammensetzung beschichtet ist.

Das erfindungsgemäße Zusammensetzung dient weiter als Schutzbeschichtung elastomerer Formteile oder als Topcoat für ein- oder beidseitig mit elastomeren Materialien beschichtete Flächengebilde. Bei diesen Flächengebilden kann es sich um Folien oder Textilien, insbesondere Gewebe, Gewirke, Gestricke oder Vliesstoffe aus Chemie-, Natur- oder Mineralfasern handeln. Beispiele hierfür sind Spritzguss oder Extrusionsformteile aus elastomeren Materialien wie Naturkautschuk, Nitrilkautschuk, Butylkautschuk oder Siliconkautschuk. Mit elastomeren Materialien beschichtete textile Träger, wie z.B. Förderbänder, Kompensatoren, Schutzkleidung, Elektroisolierschläuche, Elektroisoliermatten, beschichtete Textilen, die für Textile Konstruktionen, wie z.B.

Zelte, Abdeckungen, Planen verwendet werden können, zeigen nach der erfindungsgemäßen Ausrüstung mit dem erfindungsgemäßen Topcoat kratzfeste, schmutzabweisende Oberflächen mit reduziertem Reibungsfaktor gegen sich selbst und andere Materialien sowie eine gute Verklebbarkeit mit Siliconkautschukklebstoffen.

Der Topcoat wird auf siliconbeschichtete Textilmembranen in Schichten von 3-50g/m² aufgebracht. Ideal sind Schichtdicken von 5-15g/m². Der Topcoat muss zum einen eine ausreichende Haftung auf dem Basecoat aufweisen. Zum anderen muss er verklebbar sein, d.h. ein Siliconkleber muss eine ausreichende Haftung auf dem Topcoat aufweisen. Die Haftung der Schichten wird z.B. nach DIN 53 530 gemessen und sollte mindesten 150N/5cm betragen.

Die erfindungsgemäßen Zusammensetzungen können durch Sprühen, Streichen, Rakeln, im Walzenaufdruck, durch Siebdruck, Tauchen oder ähnliche Techniken aufgebracht werden.

Sie gehen mit üblichen Siliconkautschukoberflächen eine feste Verbindung ein. Die Aushärtung erfolgt durch Abdampfen des Lösungsmittels und anschließender Polykondensation. Die Härtung kann thermisch beschleunigt werden.
Die mit den erfindungsgemäßen Deckbeschichtungen behandelten Oberflächen sind schmutzabweisend, kratzfest und weisen reduzierte Reibungsfaktoren zu sich selbst sowie zu anderen Materialien, wie Glas, Metall, Kunststoffen, Geweben etc. auf. Es werden üblicherweise Oberflächen von Siliconkautschukformteilen, -spritzgußteilen, -isolierschläuchen, medizinischen Artikeln, mit Siliconkautschuk beschichtete Gewebe, Vliese, Filze, Folien oder Papiere mit den erfindungsgemäßen Topcoats behandelt.
Wichtige Eigenschaften des Basismaterials, wie Zugfestigkeit, Dehnung, Elastizität, Weiterreißfestigkeit, Beständigkeit gegen Wärme und Kälte, gegen Chemikalien oder Licht, werden durch die Oberflächenbehandlung nicht beeinflußt.

Vorteile der erfindungsgemäßen Zusammensetzung sind, daß die Zusammensetzungen auch auf Siliconkautschukformteile, Spritzgußteile, Isolierschläuche, etc. aufgebracht werden können. Die Anwendung ist somit nicht nur auf beschichtete Gewebe beschränkt. Die erfindungsgemäßen Zusammensetzungen bestehen nicht nur aus reinen Siliconharzen, sondern auch aus Copolymeren und Siliconanteilen. Dies macht es möglich, mehrere Eigenschaften, wie Schmutzabweisung, Kratzfestigkeit und reduzierten Reibungswiderstand mit nur einem Topcoat zu erzielen. Die Topcoats führen nicht zur Versteifung des Basismaterials, wie dies bei den bekannten Methoden der Fall ist. Dies ist vor allem im Bereich der beschichteten Textilien ein wesentlicher Vorteil.

Der erfindungsgemäße Silicondecklack weist eine verbesserte Schmutzabweisung, eine glatte, nicht blockende Oberfläche, einen niedrigen Reibungskoeffizienten sowie eine sehr gute Verklebbarkeit auf.

Die Deckbeschichtung kann in nur einem Arbeitsgang aufgebracht werden. Zusammen mit der Basisbeschichtung sind also nur zwei Arbeitsgänge erforderlich. Im Falle von beschichteten Geweben, Gewirken, Gestricken oder Filzen kann mit handelsüblichen Flüssigsiliconkautschuken als Basisbeschichtung gearbeitet werden. Es sind Verfahren bekannt, die es durch Zugabe von Haftvermittlern ermöglichen, hierbei ohne eine Grundierung eine ausreichende Haftung zu erzielen.

Die Siliconpartikel können neben den beschriebenen kondensationsvernetzenden, peroxidischvernetzenden Bindersystemen auch in additionsvernetzenden Siliconbindersystemen eingebracht werden.

### Beispiele:

In den nachfolgenden Beispielen 1-2 zur Herstellung der Siliconpartikel sind, falls jeweils nicht anders angegeben,
a) alle Mengenangaben auf das Gewicht bezogen;
b) alle Drücke 0,10 MPa (abs.);
c) alle Temperaturen 20° C .

### Lichtstreuung:

Statische und dynamische Lichtstreuung wurden mit einer Anlage gemessen, die u. a. aus einem Stabilite™ 2060-lls Kr-Laser von Spectra-Physics, einem Goniometer Sp-86 von ALV und einem ALV-3000 Digital Strukturator/Korrelator besteht. Der KryptonIonenlaser arbeitete mit einer Wellenlänge von 647,1 nm.

Probenpräparation: Die Proben (Organopolysiloxanpartikel in Toluol; der jeweilige Konzentrationsbereich ist in den Beispielen angegeben) wurden dreimal durch Millex™-FGS-Filter (0.2 µm Porengröße) von Millipore filtriert. Die Meßtemperatur bei den Lichtstreuexperimenten betrug 20°C. Die dynamischen Lichtstreumessungen wurden winkelabhängig von 50° bis 130° in 20°-Schritten durchgeführt, die Korrelationsfunktionen wurden mit dem Simplex-Algorithmus ausgewertet. Beim statischen Lichtstreuexperiment wurde die Winkelabhängigkeit des Streulichts von 30° bis 140° in 5°-Schritten gemessen.

### Beispiel 1

Zu einer Vorlage aus 125 g Wasser, 3 g Benzethoniumchlorid und 0,3 g Natriumhydroxidlösung (10 %ig in Wasser) wurden unter Rühren im Verlauf von 45 Minuten 25,0 g Methyltrimethoxysilan zudosiert. Nach weiteren 5 Stunden Rühren wurden 25 g der entstandenen Suspension unter Rühren mit 1,2 g Trimethylmethoxysilan versetzt und weitere 10 Stunden gerührt. Durch Zusatz von 50 ml Methanol wurde die Suspension gebrochen. Der ausgefallene Feststoff wurde abfiltriert, 3 mal mit 30 ml Methanol gewaschen und in 50 ml Toluol aufgenommen. Nach Zugabe von 1,6 g Hexamethyldisilazan und 10 Stunden Rühren wurde das Produkt mit 150 ml Methanol ausgefällt, abfiltriert und im Hochvakuum getrocknet. Es wurden 1,2 g eines weißen Pulvers der relativen Zusammensetzung [(CH₃)₃SiO_{1/2}]_{1,38}[CH₃SiO_{3/2}]_{1,0} erhalten. Mittels statischer und dynamischer Lichtstreuung (Lösungsmittel Toluol; Konzentrationsbereich der Messung: 0,5 - 2 g/l) wurde ein hydrodynamischer Partikelradius Rₕ von 10,0 nm und ein Trägheitsradius Rg von <10 nm ermittelt. Daraus ergibt sich ein p-Verhältnis von < 1,0. Das Molekulargewicht M_{w} der monodispersen, sphärischen Partikel wurde zu 2,0x10⁶ ermittelt. Die Organopolysiloxanpartikel sind in Toluol, Pentan, Cyclohexan, Dimethylformamid, Tetrahydrofuran, Dioxan, Diethylether, Methylmethacrylat, Styrol und Poly(dimethylsiloxan) der Viskosität 35 mPa·s gut löslich.

### Beispiel 2

Zu einer Vorlage aus 125 g Wasser, 3 g Benzethoniumchlorid und 0,3 g Natriumhydroxidlösung (10 %ig in Wasser) wurde unter Rühren im Verlauf von 1 Stunde eine Mischung aus 13,3 g Methyltrimethoxysilan und 11,7 g Dimethyldimethoxysilan zudosiert. Nach weiteren 10 Stunden Rühren wurden 25 g der entstandenen Suspension unter Rühren mit 1,2 g Trimethylmethoxysilan versetzt und weitere 10 Stunden gerührt. Durch Zusatz von 50 ml Methanol wurde die Suspension gebrochen. Der ausgefallene Feststoff wurde abfiltriert, 3 mal mit 30 ml Methanol gewaschen und in 50 ml Toluol aufgenommen. Nach Zugabe von 1,6 g Hexamethyldisilazan und 10 Stunden Rühren wurde das Produkt mit 150 ml Methanol ausgefällt, abfiltriert und im Hochvakuum getrocknet. Es wurden 2,0 g eines weißen Pulvers, das aus [(CH₃)₃SiO_{1/2}]-, [(CH₃)₂SiO_{2/2}]- und [CH₃SiO_{3/2}]-Einheiten aufgebaut ist, erhalten. Mittels statischer und dynamischer Lichtstreuung (Lösungsmittel Toluol; Konzentrationsbereich der Messung: 0,05 - 2 g/l) wurde ein hydrodynamischer Partikelradius Rₕ von 11,7 nm und ein Trägheitsradius Rg von <10 nm ermittelt. Daraus ergibt sich ein p-Verhältnis von < 0,85. Das Molekulargewicht M_{w} der monodispersen, sphärischen Partikel wurde zu 2,0x10⁶ ermittelt. Die Organopolysiloxanpartikel sind in Toluol, Tetrahydrofuran, Chloroform, Cyclohexan, Pentan und Methylmethacrylat gut löslich.

### Beispiel 3:

In eine Rühranlage, die mit einer Destillationsmöglichkeit - die zum Abscheiden von azeotrop ausgetragenem Wasser geeignet ist - ausgerüstet ist, werden 94 kg Methylmethacrylat, 94 kg Butylmethacrylat und 313 kg Toluol eingelegt. Durch Erhitzen der Mischung auf 105 °C wird enthaltenes Wasser azeotrop entfernt. Wenn aus dem Gemisch kein Wasser mehr ausgetragen wird, wird auf 30 °C abgekühlt, 21 kg Silan
GF 31 (Handelsprodukt der Wacker-Chemie GmbH) und 2,1 kg tert-Butyl-per-ethylhexanoat zugegeben. Das Reaktionsgemisch wird zum Rückfluß erhitzt, wobei bei ca. 100 °C eine deutliche Reaktion einsetzt. Das Gemisch wird 8 Std. am Rückfluß gehalten und auf 30 °C abgekühlt. 15,8 kg n-Butanol und
10,5 kg Silan M1-Trimethoxy (Handelsprodukt der Wacker-Chemie GmbH) werden unter Rühren eingemischt. Nach 30 Min. Rühren werden 720 kg Isopropanol und 180 kg Benzin mit einem Siedebereich von 120-140 °C zugegeben. Weitere 30 Min. wird gerührt. Über einen Filter wird abgefüllt.
Es wird eine klare, farblose Lösung mit einer Viskosität von 8 mPa·s und einem Feststoffgehalt von 14 Gew.% erhalten. Anschließend werden 239kg Siliconelastomerpartikel in organischen Lösemitteln (Handelsbezeichnung MIBK 444660 der Wacker-Chemie GmbH) zugegeben. Nach weiteren 2h Rühren bei Raumtemperatur wird das Produkt in passende Gebinde abgefüllt. Die klare, farblose Flüssigkeit zeigt eine Viskosität von 13mm²/s und einen Feststoffgehalt von 22%.

### Beispiel 4:

In einer Anlage, die mit einer Dissolverscheibe ausgerüstet wird, werden 47,8 kg Benzin (Siedebereich 140-150 °C), 102,6kg Methylethylketon, 236,2 kg Xylol, 9,9 kg n-Butanol und 60kg Tetrahydrofuran vorgelegt und unter starkem Durchmischen 52 kg Vinnol E 15/40 A (Handelsprodukt der Wacker-Chemie GmbH) in diesem Lösungsmittelgemisch gelöst.
0,5 kg Isocyanopropyltriethoxysilan werden zugegeben und eine Stunde am Rückfluß (ca. 64 °C) gekocht. Es wird auf 30 °C abgekühlt und 50 kg Tetrahydrofuran, 350 kg Toluol und
1 000 kg Aceton zugegeben. 30 Min. wird intensiv vermischt. Das klare, farblose Produkt weist eine Viskosität von 11 mPa.s und einen Festgehalt von ca. 2,8 Gew.-% auf. Anschließend werden 239kg Siliconelastomerpartikel in organischen Lösemitteln (Handelsbezeichnung MIBK 444660 der Wacker-Chemie GmbH) zugegeben. Nach weiteren 2h Rühren bei Raumtemperatur wird das Produkt in passende Gebinde abgefüllt. die klare, farblose Flüssigkeit zeigt eine Viskosität von 13mm²/s und einen Feststoffgehalt von 22%.

### Beispiel 5

In einem Rührwerk mit Destillationsaufsatz werden 700kg eines Methylsiliconharzes in toluolischer Lösung (Verkaufsbezeichnung Siliconharzlösung K Toluol (Verkaufsprodukt der Wacker-Chemie GmbH) und 200kg Siliconharzlösung K0118 (Verkaufsprodukt der Wacker-Chemie GmbH) eingelegt und durchmischt. Unter ständigem Rühren werden 324kg Toluol durch Erwärmen bei Normaldruck abdestilliert.

Die Anlage mit Inhalt wird auf Raumtemperatur abgekühlt und 108kg Methyltriethoxysilan (Handelsbezeichnung M1-Triethoxysilan der Wacker-Chemie GmbH), 54kg Tetraethoxysilan (Handelsbezeichnung TES28 der Wacker-Chemie GmbH), 54kg Vinyltriethoxysilan (Handelsbezeichnung Geniosil GF56 der Wacker-Chemie GmbH) sowie 5kg Zirkoniumbutylat in der genannten Reihenfolge unter Rühren zugegeben.
1h wird bei Raumtemperatur gerührt, dann werden 900kg Aceton und 44kg Wasser unter Rühren zugegeben und 1h gerührt. Anschließend werden 239kg Siliconelastomerpartikel in organischen Lösemitteln (Handelsbezeichnung MIBK 444660 der Wacker-Chemie GmbH) zugegeben. Nach weiteren 2h Rühren bei Raumtemperatur wird das Produkt in passende Gebinde abgefüllt. die klare, farblose Flüssigkeit zeigt eine Viskosität von 13mm²/s und einen Feststoffgehalt von 22%.

### Beispiel a):

Der erfindungsgemäße Decklack wird mit 5 Gew.% Hydrogendimethylpolysiloxan (Handelsbezeichnung Vernetzer W der Wacker-Chemie GmbH) abgemischt und im Rakelverfahren auf ein Glasgewebe mit beidseitiger Siliconkautschukbeschichtung aus Elastosil R 401/40 (Handelsbezeichnung der Wacker-Chemie GmbH) aufgetragen. Das Gesamtgewicht des beschichteten Gewebes beträgt 240g/m² Nach der Aushärtung des Decklackes bei 180°C in 2min ergibt sich ein Flächengewicht des Decklackes von 10g/m².

Die Membran ohne Decklack weist eine Schmutzabweisung von 5-5-6 auf. Bei Verklebung mit einem Siliconklebeband ergeben sich Haftungswerte von 217N/5cm. Mit Topcoats nach dem Stand der Technik werden Schmutzabweisungen zwischen 4-4-3 und 2-3-2 erreicht sowie Haftungswerte zwischen 0 und 106N/5cm. Die Membran mit dem erfindungsgemäßen Decklack weist eine Schmutzabweisung von 2-2-1 und Haftungswerte von 233N/5cm auf. Die Anschmutzergebnisse sowie die Haftungswerte werden auch durch Bewitterung im Freien für 6 Monate nur geringfügig herabgesetzt.

Die vergrößerte Oberfläche bei gleichzeitig guter Einbindung in die Matrix bewirkt eine gute Verklebbarkeit.

| | A | B | C | Haftung (N/5cm) mit Siliconklebeband |
|---|---|---|---|---|
| siliconbeschichtete Membran ohne Decklack | 5 | 5 | 6 | 217 |
| Topcoat nach EP 718 355 | 3 | 3 | 3 | 106 |
| im Markt erhältlicher Silicondecklack A | 4 | 4 | 3 | 10 |
| im Markt erhältlicher Silicondecklack B | 2 | 3 | 2 | 0 |
| erfindungsgemäßer Decklack Beispiel 5 | 2 | 2 | 1 | 233 |

Die Messergebnisse zeigen, dass der erfindungsgemäße Decklack eine gute Schmutzabweisung sowie gutes Abreinigungsverhalten aufweist. Die Haftungswerte im Verklebetest sind deutlich höher als der geforderte Wert.

### Beispiel b):

Ein Polyestergewebe mit 100g/m² Rohgewicht wird beidseitig mit einer Siliconbeschichtung aus Siliconflüssigkautschuk versehen (Beschichtungsgewicht 100g/m). Das beschichtete Gewebe ohne Decklack weist Anschmutzungsnoten von 5-4-4 auf. Das beschichtete Gewebe mit Decklack weist Anschmutzungsnoten von 3-3-2 auf. Die Verbesserung des Anschmutzverhaltens bleibt auch nach 5 Waschzyklen bei 60°C deutlich.

### Beispiel c):

Ein mit 30g/m² Elastosil LR 6250F (Handelsbezeichnung der Wacker-Chemie GmbH) beschichtetes Nylongewebe wird mit dem erfindungsgemäßen Topcoat beschichtet. Das Auftragsgewicht des Decklackes beträgt 5g/m².

Zur Messung des Reibungskoeffizienten werden zwei Muster jeweils Beschichtung auf Beschichtung platziert. Der Reibungskoeffizient wird nach DIN 53375 gemessen.

Durch den erfindungsgemäßen Decklack wird der statische und kinetische Reibungskoeffizient verbessert. Der Scrub-Test nach DIN ISO 5981 zeigt, dass die Abriebfestigkeit der Beschichtung nicht negativ beeinflusst wird.

| | Reibungskoeffizient kinetisch | Reibungskoeffizient statisch | Scrub |
|---|---|---|---|
| beschichtetes Nylongewebe | 0,35 | 0,42 | >1000 |
| beschichtetes Nylongewebe + Decklack | 0,27 | 0,32 | >1000 |

### Testmethoden zur Prüfung der Schmutzabweisung

Zur Bestimmung der Schmutzabweisung von siliconbeschichteten Membranen liegt keine allgemein akzeptierte Norm vor. Deshalb wurde ein hausinternes Prüfverfahren entwickelt. Rußpulver wird mit einem Papiertuch nebeneinander an 3 Stellen (A, B und C) mit jeweils 3 Kreisbewegungen auf die Membran aufgetragen. Kreis B und C werden dann mit destilliertem Wasser für 10s abgespült. Kreis C wird zusätzlich mit einem feuchten Papiertuch in 3 Kreisbewegungen gereinigt. Kreis A zeigt, wieviel Ruß von der Membran angenommen wird (Anschmutzung). Kreis B zeigt, wieviel Ruß durch Wasser abgespült wird (Abregnen). Kreis C zeigt, wieviel Ruß durch feuchtes Nachreinigen entfernt werden kann (Abreinigung). Die Anschmutzung wird visuell anhand einer Skala von 1 (sehr gut) bis 6 (sehr schlecht) bewertet. So ergibt sich eine aus 3 Ziffern bestehende Klassifizierung. Das Ziel der Entwicklung war, eine Benotung von 2-3-2 oder besser zu erreichen.

### Testmethoden zur Prüfung der Verklebbarkeit

Zur Bestimmung der Verklebbarkeit werden 2 mit Silicondecklack behandelte siliconbeschichtete Membranen mit Hilfe eines Siliconklebebandes (z.B. aus Elastosil R 4001/40, Handelsbezeichnung der Wacker-Chemie GmbH, Stärke 0,6mm) bei 180°C in 2 min in einer Heizpresse verklebt. Die Haftung der Klebeverbindung wird nach DIN 53 530 im Schältest gemessen. Ziel der Entwicklung war, eine Gesamtlagenhaftung von 150N/5cm oder besser zu erreichen.

## Patentansprüche

1. Zusammensetzung herstellbar unter Verwendung von
Polymerkomponenten (1)
(A1) Polyorganosiloxanen aus Einheiten (T-Einheiten) der Formel (R₁Si-O_{3/2}) und gegebenenfalls Einheiten (M-Einheiten) der Formel (R₃Si-O_{1/2}) und/oder
(A2) Polyorganosiloxanen aus Einheiten (Q-Einheiten) der Formel (Si-O_{4/2}) und gegebenenfalls Einheiten (M-Einheiten) der Formel (R₃Si-O_{1/2}) worin
R gleich oder verschieden, gegebenenfalls halogenierte Kohlenwasserstoffreste mit 1-18 Kohlenstoffatomen je Rest oder OR¹ bedeutet, wobei R¹ gleich oder verschieden sein kann und Wasserstoff oder einen einwertigen gegebenenfalls substituierten Kohlenwasserstoffrest mit 1-8 Kohlenstoffatom(en) bedeutet,
mit der Maßgabe, daß pro Molekül 0,01 bis 3,0 Gew.-% Sigebundene Reste OR¹ enthalten sind,
sowie gegebenenfalls einer oder mehreren Polymerkomponenten ausgewählt aus der Gruppe bestehend aus:
(B) Vinylchlorid-Hydroxypropylacrylat-Copolymere
(C) Vinylacetat-Ethylen-Copolymer
(D) Polyvinylchlorid
(E) Polyamid
(F) Polyester
(G) Acrylat-Polyester-Copolymere
(H) Polyamid-Polyester-Copolymere
(I) Vinylacetat-Polyester Copolymere
(J) Monomere (Meth)acrylate, mit der Maßgabe, daß sie mit Sigebundenen (Meth)acrylatgruppen haltigen Silanen copolymerisiert werden,
(2) Silan der allgemeinen Formel
R³ₓSi(OR²)₄₋ₓ ,
wobei R² einen einwertigen, gegebenenfalls substituierten Kohlenwasserstoffrest,
R³ einen einwertigen organischen Rest,
x 0 oder 1 bedeutet,
(3) Siliconpartikel, die aus einem einzigen Molekül bestehende vernetzte Organopolysiloxanpartikel sind, die einen mittleren Durchmesser von 5 bis 200 nm aufweisen, bei denen mindestens 80 % der Partikel einen Durchmesser besitzen, der höchstens 30 % vom mittleren Durchmesser abweicht und die in einem Lösungsmittel zu mindestens 5 Gew.-% löslich sind.
(4) gegebenenfalls Lösungsmittel
(5) gegebenenfalls Katalysator
(6) gegebenenfalls Wasser.

2. Zusammensetzung nach Anspruch 1, **dadurch gekennzeichnet, daß** bei den Polyorganosiloxanen (A1) das Verhältnis M-Einheiten zu T-Einheiten 0-1,8:1 ist und bei den Polyorganosiloxanen (A2) das Verhältnis M-Einheiten zu Q-Einheiten 0,00-2,7:1 ist.

3. Zusammensetzung nach Anspruch 2, **dadurch gekennzeichnet, dass** die aus einem einzigen Molekül bestehenden, vernetzten Organopolysiloxanpartikel, aus
0,5 bis 80,0 Gew.-% Einheiten der allgemeinen Formel
[R⁴₃SiO_{1/2}] **(1)**,
0 bis 99,0 Gew.-% Einheiten der allgemeinen Formel
[R⁴₂SiO_{2/2}] **(2)**,
0 bis 99,5 Gew.-% Einheiten der allgemeinen Formel
[R⁴SiO_{3/2}] **(3)**,
0 bis 80,0 Gew.-% Einheiten der allgemeinen Formel
[SiO_{4/2}] **(4)**
und 0 bis 20,0 Gew.-% Einheiten der allgemeinen Formel
[R⁴aSi(O_{(3-a)/2})-R⁵-X-(R⁵-Si(O_{(3-a)/2}))_{b}R⁴ₐ] **(5**) ,
aufgebaut sind, wobei
**R**^{**4**} Wasserstoffatome oder gleiche oder verschiedene einwertige SiC-gebundene, gegebenenfalls substituierte C₁- bis C₁₈₋Kohlenwasserstoffreste,
**R**^{**5**} gleiche oder verschiedene zweiwertige SiC-gebundene, gegebenenfalls substituierte C₁- bis C₁₈₋Kohlenwasserstoffreste, welche durch
zweibindige, beidseitig an Kohlenstoffatome gebundene Reste aus der Gruppe -O-, -COO-, -OOC-, -CONR⁶-, -NR⁶CO-und -CO- unterbrochen sein können,
**R**^{**6**} ein Wasserstoffatom oder einen Rest **R**^{**4**}**,**
**X** einen Rest aus der Gruppe -N=N-, -O-O-, -S-S- und -C(C₆H₅)₂-C(C₆H₅)₂-,
**a** die Werte 0, 1 oder 2 und,
**b** die Werte 0 oder 1 bedeuten,
mit der Maßgabe, daß die Summe der Einheiten der allgemeinen Formeln (3) und (4) mindestens 0,5 Gew.-% beträgt.

4. Verfahren zur Herstellung der Zusammensetzung nach einem oder mehreren der Ansprüche 1 bis 3, **dadurch gekennzeichnet, dass** die Komponenten der Zusammensetzung umgesetzt oder vermischt werden.

5. Formkörper, Flächengebilde oder Elastomer, **dadurch gekennzeichnet, dass** der Formkörper oder das Elastomer mit einer Zusammensetzung nach Anspruch 1 bis 4 oder nach Anspruch 5 hergestellt, beschichtet wird.
